(19) Europäisches Patentamt
European Patent Office
Office européen des brevets

(11) Veröffentlichungsnummer: **0 000 043**
**B1**

# (12) EUROPÄISCHE PATENTSCHRIFT

(45) Veröffentlichungstag der Patentschrift: **06.01.82**

(51) Int. Cl.³: **C 07 F 9/32** // C08G79/04

(21) Anmeldenummer: **78100072.4**

(22) Anmeldetag: **01.06.78**

(54) **Bisphosphinsäureanhydride und Verfahren zu ihrer Herstellung.**

(30) Priorität: **11.06.77 DE 2726479**

(43) Veröffentlichungstag der Anmeldung: **20.12.78 Patentblatt 78/1**

(45) Bekanntmachung des Hinweises auf die Patenterteilung: **06.01.82 Patentblatt 82/1**

(84) Benannte Vertragsstaaten: **BE CH DE FR GB NL**

(56) Entgegenhaltungen:
**DE-A-2 328 343**
**DE-A-2 726 478**
**FR-A-2 264 823**

(73) Patentinhaber: **HOECHST AKTIENGESELLSCHAFT, Postfach 80 03 20, D-6230 Frankfurt/Main 80 (DE)**

(72) Erfinder: **Kleiner, Hans-Jerg, Dr., Altkönigstrasse 11a, D-6242 Kronberg/Taunus (DE)**
Erfinder: **Dürsch, Walter, Dr., In der Braubach 4, D-6240 Königstein/Taunus (DE)**
Erfinder: **Linke, Fritz, Dr., Im Flemetz 8, D-6240 Königstein/Taunus (DE)**

EP 0 000 043 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Bisphosphinsäureanhydride und Verfahren zu ihrer Herstellung

Alkanphosphinsäureanhydride der Formel R'R''P(O) – O – P(O)R'R'', in der R' und R'' Alkyl, Aryl- oder Aralkylgruppen bedeuten, sind bereits bekannt. Sie können z. B. durch Umsetzung von Alkanphosphinsäuren oder Alkanphosphinsäureestern mit Phosgen gewonnen werden (DE-OS 2 129 583).

Aus der DE-OS 2 328 343 sind bereits Bis-phosphinsäuren bekannt. Diese freien Bis-phosphinsäuren unterscheiden sich aber in ihrer Reaktivität grundlegend von den im folgenden beschriebenen Anhydriden den Bis-phosphinsäuren und können wegen dieser unterschiedlichen Reaktivität nicht, wie es bei den Anhydriden der Fall ist, mit Verbindungen, die Hydroxylgruppen enthalten, umgesetzt werden. Die Endprodukte dieser Reaktion stellen jedoch wertvolle flammhemmende Verbindungen dar, und diese flammhemmenden Verbindungen kann man somit nicht unter Verwendung der vorbekannten freien Bis-phosphinsäuren gewinnen, sondern nur auf dem Weg über die erfindungsgemäßen Anhydride.

In dem Bestreben, diese Umsetzung auch auf die Herstellung anderer Phosphinsäureanhydride auszudehnen, wurde nun gefunden, daß sich auch Bisphosphinsäureanhydride durch Umsetzung der freien Bisphosphinsäuren, von deren Salzen und/oder Estern mit anorganischen Säurechloriden, Phosgen oder Oxalylchlorid in ausgezeichneter Weise darstellen lassen.

Erfindungsgegenstand ist somit ein Verfahren zur Herstellung von Bisphosphinsäureanhydriden der Formel

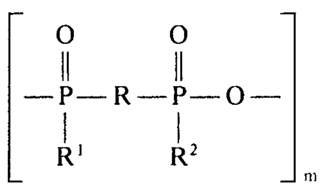

(I)

worin R = gesättigter offenkettiger oder cyclischer Alkylrest, ein Arylen- oder Aralkylenrest, sowie $R^1$ und $R^2$, welche gleich oder verschieden sein können, gegebenenfalls halogensubstituierte Alkyl-, Aryl- oder Aralkylreste und
m ganze Zahlen ≧ 1, vorzugsweise ≧ 2, bedeutet,
das dadurch gekennzeichnet ist, daß man Bisphosphinsäurederivate der Formel

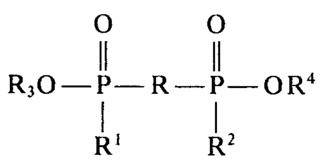

(II)

worin R, $R^1$ und $R^2$ die gleiche Bedeutung wie in Formel I haben, und $R^3$ und $R^4$, welche gleich oder verschieden sein können, Wasserstoff, einwertige Kationen, die Ammoniumgruppe oder gegebenenfalls halogensubstituierte Alkylgruppen bedeuten, mit anorganischen Säurechloriden und/oder mit Phosgen und/oder mit Oxalylchlorid und/oder mit den entsprechenden Bromverbindungen im Molverhältnis von 1 : 1 bei Temperaturen zwischen Raumtemperatur (ca. 20° C) und 250° C, vorzugsweise zwischen ca. 100 und 200° C, gegebenenfalls in Gegenwart inerter Lösungsmittel, umsetzt.

Als gesättigte offenkettige oder cyclische Alkylreste R in den Formeln I und II kommen alle möglichen verzweigten und unverzweigten sowie cyclischen Alkylenreste wie zum Beispiel

$-CH_2-$ $\quad -CH_2-CH_2-$ $\quad (-CH_2-)_3$ $\quad -(CH_2)_4-$

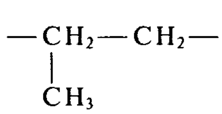

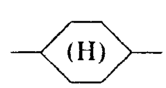

in Frage; bevorzugt sind gesättige offenkettige verzweigte oder unverzweigte Alkylenreste mit 1 – 10, vorzugsweise mit 1 – 6 C-Atomen, wovon die unverzweigten Alkylenreste wiederum besonders bevorzugt sind.

Als Arylenreste R seien etwa der Phenylen- und der Naphthylenrest genannt, wovon der p-Phenylenrest bevorzugt ist. Aralkylenreste R sind etwa der Tolylenrest, der Xylylenrest etc., wovon der p-Xylylenrest den bevorzugten Rest darstellt.

Selbstverständlich können alle als R in Frage kommenden Reste noch reaktionsinerte Substituenten wie zum Beispiel Halogensubstituenten tragen.

Als gegebenenfalls halogensubstituierte Alkylreste $R^1$ und $R^2$, welche gleich oder verschieden sein können, sind in beispielhafter Weise zu nennen:

$CH_3$ $C_2H_5$ $n\text{-}C_3H_7$ $i\text{-}C_4H_9$ $n\text{-}C_{10}H_{21}$ $CH_2Cl$ $C_2H_4Br$

bevorzugt sind (unsubstituierte) Alkylgruppen mit 1 bis 4, insbesondere 1—2 C-Atomen.

Als Aryl- und Aralkylreste $R^1$ und $R^2$ kommen etwa der Phenyl-, der Naphthyl-, der Benzylrest in Frage.

In den Verbindungen I und II sind die Reste $R^1$ und $R^2$ vorzugsweise gleich,
m bedeutet in Formel I ganze Zahlen von mindestens gleich 1, vorzugsweise mindestens gleich 2.

Als einwertige Kationen für die Reste $R^3$ und $R^4$ in Formel II sind in erster Linie die Alkaliionen, vor allem Na- und K-Ionen zu nennen; wenn $R^3$ und $R^4$ gegebenenfalls halogensubstituierte Alkylgruppen sind, kommen in erster Linie Alkylgruppen mit 1—5 C-Atomen in Frage, welche noch durch Halogeninsbesondere durch Chlor-, vorzugsweise 1—3mal substituiert sein können. $R^3$ und $R^4$ sind vorzugsweise gleich.

Als Bisphosphinsäurederivate der Formel II, welche als Ausgangsverbindungen für das erfindungsgemäße Verfahren verwendet werden, seien in beispielhafter Weise genannt:

Methan-bis-methylphosphinsäuremethylester,
Methan-bis-methyl-phosphinsäureäthylester,
Methan-bis-methylphosphinsäureisopropylester,
Äthan-1,2-bis-(methylphosphin-säurebutylester),
Äthan-1,2-bis-(methylphosphinsäureamylester),
Äthan-1,2-bis-(äthylphosphinsäureäthylester),
Äthan-1,2-bis-(methylphosphinsäure-2-chloräthylester),
Äthan-1,2-bis-(butylphosphinsäuremethylester),
Butan-1,4-bis-(methylphosphinsäurebutylester),
Hexan-1,6-bis-(methylphosphinsäurebutylester),
Dekan-1,10-bis-(methylphosphinsäureisobutylester),
Butan-1,4-bis-(methylphosphinsäure)-monobutylester,
Methan-bis-(methylphosphinsäure), Äthan-1,2-bis-(methylphosphinsäure),
Propan-1,3-bis-(methylphosphinsäure), Butan-1,4-bis-(äthylphosphinsäure),
Hexan-1,6-bis-(methylphosphinsäure), Dekan-1,10-bis-(methylphosphinsäure),
Cyclohexan-1,4-bis-(methylphosphinsäure), p-Phenylen-bis-(äthylphosphinsäure),
p-Xylylen-bis-(chlormethylphosphinsäure),
die Natrium-, Kalium-, Ammoniumsalze der genannten Säuren.

Diese Verbindungen können nach bekannten Verfahren hergestellt werden; z. B. sind die Äthan-1,2-bis-(alkylphosphinsäurealkylester) technisch leicht herstellbar nach dem Verfahren der DE-OS 2 302 523. Aus diesen und analogen Estern können die entsprechenden Säuren hergestellt werden, vorzugsweise nach den Verfahren der DE-PS 2 441 783 und 2 441 878. Die als Umsetzungskomponenten verwendeten anorganischen Säurechloride sind bevorzugt Thionylchlorid und Phosphorpentachlorid. Diese Säurechloride sowie auch das Phosgen und das Oxalylchlorid können sowohl einzeln als auch im Gemisch eingesetzt werden. Es ist auch möglich, anstelle der Säurechloride die entsprechenden Bromverbindungen — also Thionylbromid, Phosphorpentabromid, $COBr_2$, Oxalylbromid einzusetzen. Bevorzugtes Säurechlorid ist Phosgen.

Die Reaktionspartner können an sich in beliebiger Reihenfolge der Reaktion zugeführt werden. In der Regel ist es zweckmäßig, die Bisphosphinsäurederivate II vorzulegen und die Säurechloride oder -bromide zuzuführen. Die Umsetzung der Bisphosphinsäuresalze muß in Gegenwart von inerten Lösungsmitteln erfolgen, wovon Chlorkohlenwasserstoffe wie zum Beispiel Chloroform, Methylenchlorid, Chlorbenzol, Dichlorbenzol bevorzugt sind.

Die Umsetzung der freien Bisphosphinsäuren und der Bisphosphinsäureester bedarf an sich keiner Lösungsmittel. Ihr Einsatz kann jedoch aus technischen Gründen zweckmäßig sein.

Die Umsetzung verläuft derart, daß Bisphosphinsäurederivate II und Säurehalogenid im Molverhältnis von etwa 1 : 1 eingesetzt werden, wobei geringe Überschüsse an Säurehalogenid nicht kritisch sind, da sie zu einer vollständigen Umsetzung beitragen.

Größere Überschüsse sind nicht zweckmäßig, da sich die gebildeten Bisphosphinsäureanhydride I mit überschüssigem Säurehalogenid weiter zu den Bisphosphinsäurehalogeniden umsetzen. Werden solche Halogenide als Nebenprodukte gebildet, so können sie durch Zugabe von berechneten Mengen von Wasser wieder zu den Bisphosphinsäureanhydriden I hydrolysiert werden.

Die Umsetzungen verlaufen im Prinzip bereits bei Raumtemperatur; häufig ist es jedoch vorteilhaft, bei Temperaturen zwischen etwa 50 und 250°C, vorzugsweise zwischen etwa 100 und 200°C, zu arbeiten. Beim Einsatz der Biphosphinsäurealkylester etwa bei Raumtemperatur erhält man als Nebenprodukte die entsprechenden Alkylhalogenide. Kurzkettige Alkylhalogenide entweichen gasförmig und sind ohne Einfluß auf das Reaktionsgut. Längerkettige Alkylhalogenide wie zum Beispiel Butylchlorid können die gebildeten Anhydride jedoch zur Ausfällung bringen, so daß durch die erfolgende Phasentrennung der Reaktionsablauf gestört wird. Deshalb ist in einem derartigen Fall das Arbeiten bei höheren Temperaturen, bei denen die gebildeten höheren Alkylhalogenide abdestillieren, von Vorteil. Wird auf das Arbeiten in Lösungsmitteln verzichtet, muß spätestens gegen Ende der Reaktion eine Reaktionstemperatur gewählt werden, die oberhalb des Erstarrungspunktes des Endproduktes liegt.

Nach beendeter Umsetzung erhält man durch an sich bekannte Maßnahmen zum Abtrennen von in dem Reaktionsgut gegebenenfalls verbliebenen Lösungsmittel und/oder Nebenprodukten wie durch Ausblasen mit inertem Gas (zum Beispiel Stickstoff), Destillieren — gegebenenfalls Andestillieren — im Vakuum die Endprodukte in weitgehend reiner Form. Die Ausbeuten sind praktisch quantitativ. Da eine Reinigung der Endprodukte nur schwierig durchführbar ist, sollten reine Ausgangsprodukte zum Einsatz gelangen.

Die so erhaltenen Anhydride liegen im allgemeinen als lineare Polymere vor, deren Polymerisationsgrad — in der Formel I mit m bezeichnet — unbekannt ist. Die Endgruppe der Polymerkette ist dabei wohl durch Wasserstoff bzw. Hydroxyl abgeschlossen. In Einzelfällen können auch ringförmige Verbindungen vorliegen. Insbesondere die Bisphosphinsäureanhydride der Formel I, bei welchen R = gesättigter, offenkettiger, verzweigter oder unverzweigter Alkylenrest mit 1 – 10, vorzugsweise 1 – 6 C-Atomen,

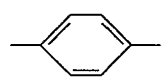

oder

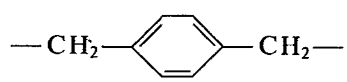

und $R^1$ und $R^2$ = gleiche oder verschiedene Alkylgruppen mit 1 – 4, vorzugsweise mit 1 – 2 C-Atomen sind neue und wertvolle Verbindungen, welche — ebenso wie die vorstehend beschriebene Herstellungsverfahren — Erfindungsgegenstand sind. Die bevorzugten Verbindungen sind diejenigen, bei welchen in Formel I
R = gesättigter unverzweigter Alkylenrest mit 1 – 10, vorzugsweise mit 1 – 6 C-Atomen und
$R^1 = R^2$.

Die erfindungsgemäßen neuen Verbindungen finden Verwendung als Comonomere bei der Herstellung von Kunststoffen, wie zum Beispiel von Polymerisaten, Polykondensaten oder Polyadditionsprodukten; besonders erwähnenswert sind — insbesondere lineare — Polyester wie diejenigen der Terephthalsäure, denen sie gute flammwidrige Eigenschaften, aber auch eine verbesserte Anfärbbarkeit verleihen (siehe DE-PS 2 236 037). Insbesondere kommen die neuen Verbindungen aber in Frage als Zwischenprodukte zur Herstellung von Mitteln zur Flammhemmung von Fasermaterial (siehe deutsche Patentanmeldung P 2 726 478.4; Offenlegungsschrift 2 726 478). Man erhält diese Produkte gemäß der DE-OS 2 726 478 durch Umsetzung von Verbindungen, die Hydroxylgruppen enthalten, mit einem organischen Phosphoranhydrid. Die dabei anfallenden Reaktionsprodukte werden anschließend oxalkyliert. Die so erhaltenen Endprodukte zeichnen sich dadurch aus, daß sie günstige Hydroxylzahlen aufweisen. Diese niedrigen Hydroxylzahlen bewirken, daß man zur Fixierung dieser phosphororganischen Flammschutzmittel auf dem Textilmaterial nur sehr wenig Substanz eines Fixiermittels benötigt, beispielsweise in Form von Melaminharz-Vorkondensaten. Würde man nämlich solche phosphororganischen Verbindungen verwenden, die hohe Hydroxylzahlen aufwiesen, müßte man auch entsprechend höhere Mengen solcher Melaminharz-Vorprodukte zur Fixierung benötigen. Die Verwendung größerer Mengen an Melaminharz beeinträchtigt aber negativ den Griff des so ausgerüsteten Textilmaterials und bedingt außerdem ein Absinken des relativen Phosphorgehalts, womit eine Verschlechterung des Flammhemmeffekts verbunden ist. Außerdem zeigen die Melaminharze, wie in der Fachwelt bekannt ist, infolge ihrer Struktur einen sogenannten Gerüst- oder Dochteffekt, der im Falle eines Brandes die Brandwirkung verstärkt statt vermindert. Alle diese Nachteile werden vermieden, wenn man solche phosphororganischen Verbindungen einsetzt, die nur relativ niedrige Hydroxylzahlen haben, wie es bei diesen Verbindungen der DE-OS 2 726 478 der Fall ist.

Die folgenden Beispiele sollen der weiteren Erläuterung der Erfindung dienen, ohne diese zu beschränken.

## Beispiel 1

211 g Methan-bis-(methylphosphinsäureisopropylester) werden auf 100°C erhitzt. Dann werden innerhalb von 3 Stunden ca. 100 g Phosgen unter lebhaftem Rühren eingegast, wobei die

Innentemperatur bis auf 190° C gesteigert wird. Gleichzeitig destilliert das gebildete Isopropylchlorid ab. Nach Beendigung der Reaktion wird 2 Stunden Stickstoff bei 190°C durch das Reaktionsgut geleitet. Reste flüchtiger Bestandteile werden dann im Wasserstrahlvakuum während einer Stunde bei 190° C abgezogen.

Man erhält 127 g Methan-bis-(methylphosphinsäure)-anhydrid mit einem Erstarrungspunkt von etwa 150° C. Das Produkt ist unlöslich in Chloroform. Die Ausbeute beträgt 100% d. Th.

Beispiel 2

300 g Äthan-1,2-bis-(methylphosphinsäureisobutylester) werden auf 160°C erhitzt. Nun wird während 3 Stunden Phosgen unter lebhaftem Rühren durchgeleitet. Im Zuge der Reaktion destilliert gebildetes Isobutylchlorid ab. Nach beendeter Reaktion wird bei 170° C während 6 Stunden Stickstoff durchgeblasen.

Man erhält 169 g Äthan-1,2-bis-(methylphosphinsäure)-anhydrid mit einem Erstarrungspunkt von etwa 115° C – 120° C. Das Produkt ist löslich in Chloroform. Die Ausbeute beträgt 100% d. Th.

Im $^1$H-NMR-Spektrum, aufgenommen mit dem Varian-T60-Spektrometer bei einer Meßfrequenz von 60 MHz in $CDCl_3$ als Lösungsmittel mit der Bezugssubstanz Tetramethylsilan (TMS) als internem Standard, wurden folgende Signale festgestellt:

$CH_3$: 1,9 ppm ($J_{pH}$ = 15 Hz)
$CH_2$: 1,5 – 3 ppm

Beispiel 3a

580 g Methanphosphonigsäure-n-butylester werden unter Stickstoff auf 165° C erhitzt. Dann wird unter lebhaftem Rühren während 2 Stunden ein Gemisch von 175 g Hexadien-1,5 und 3 g Di-tert.-butylperoxid eingetropft und 1 Stunde bei dieser Temperatur nachgerührt. Anschließend wird bei 5 Torr bis zu einer Innentemperatur von 170°C andestilliert. Es verbleiben 655 g Hexan-1,6-bis-(methylphosphinsäure-n-butylester). Das entspricht einer Ausbeute von 87% d. Th.

Beispiel 3b

701 g Hexan-1,6-bis-(methylphosphinsäure-n-butylester) werden auf 130°C erhitzt. Nun werden unter lebhaftem Rühren innerhalb von 5 Stunden 220 g Phosgen eingegast und danach 2 Stunden Stickstoff durchgeblasen. Dabei destilliert n-Butylchlorid ab. Anschließend wird auf 180° C erhitzt und während 4 Stunden bei dieser Temperatur im Wasserstrahlvakuum gehalten.

Es verbleiben 442 g Hexan-1,6-bis-(methylphosphinsäure)-anhydrid mit einem Erstarrungspunkt von etwa 55° – 60° C. Das Produkt ist löslich in Chloroform. Die Ausbeute beträgt ca. 100% d. Th.

Im $^1$H-NMR-Spektrum, aufgenommen mit dem Varian-T60-Spektrometer bei einer Naßfrequenz von 60 MHz in $CDCl_3$ als Lösungsmittel mit der Bezugssubstanz TMS als internem Standard, wurden folgende Signale festgestellt:

$CH_3$: 1,9 ppm ($J_{pH}$ = 15 Hz)
$CH_2$: 1 – 3 ppm

Beispiel 4

394 g Dekan-1,10-bis-(methylphosphinsäure) werden auf 130°C bis 140°C erhitzt. Nun werden innerhalb von 4 Stunden 150 g Phosgen eingeleitet. Anschließend wird auf 180° C erhitzt und während 6 Stunden ein Wasserstrahlvakuum angelegt.

Es verbleiben 370 g Dekan-1,10-bis-(methylphosphinsäure)-anhydrid mit einem Erstarrungspunkt von etwa 20° – 25° C. Das Produkt ist löslich in Chloroform. Die Ausbeute beträgt 100% d. Th.

Im $^1$H-NMR-Spektrum, aufgenommen mit dem Varian-T60-Spektrometer bei einer Meßfrequenz von 60 MHz in $CDCl_3$ als Lösungsmittel mit der Bezugssubstanz TMS als internem Standard, wurden folgende Signale festgestellt:

$CH_3$: nicht bestimmbar
$CH_2$: 1 – 3 ppm

## Beispiel 5

39 g p-Phenylen-bis-(methylphosphinsäureäthylester) werden auf 180° C erhitzt und unter Rühren langsam Phosgen eingeleitet. Im Verlaufe von 1,5 Stunden wird die Temperatur auf 230° C gesteigert. Anschließend wird bei dieser Stickstoff durchgeleitet. Es verbleiben 29 g p-Phenylen-bis-(methylphosphinsäure)-anhydrid mit einem Erstarrungspunkt von etwa 190 – 200° C. Das Produkt ist löslich in Chloroform. Die Ausbeute beträgt 100% d. Th.

Im $^1H$-NMR-Spektrum, aufgenommen mit dem Varian-T60-Spektrometer bei einer Meßfrequenz von 60 MHz in $CDCl_3$ als Lösungsmittel mit der Bezugssubstanz TNS als internem Standard, wurden folgende Signale festgestellt:

$CH_3$: 1,85 ppm und 2,1 ppm ($^2J_{pH}$: 14 – 14 Hz)
arom.: 7,5 – 8,5 ppm

## Beispiel 6

44 g p-Xylylen-bis-(methylphosphinsäure) werden auf 240° C erhitzt und unter Rühren langsam Phosgen eingeleitet. Im Verlaufe von 1,5 Stunden wird die Temperatur auf 210° C gesenkt. Anschließend wird bei dieser Temperatur Stickstoff durchgeleitet. Es verbleiben 41 g p-Xylylen-bis-(methylphosphinsäure)-anhydrid mit einem Erstarrungspunkt von etwa 165 – 175° C.

Das Produkt ist löslich in Chloroform. Die Ausbeute beträgt 100% d. Th.

Im $^1H$-NMR-Spektrum, aufgenommen mit dem Varian-T60-Spektrometer bei einer Meßfrequenz von 60 MHz in $CDCl_3$ als Lösungsmittel mit der Bezugssubstanz TMS als internem Standard, wurden folgende Signale festgestellt:

$CH_3$: 1,25 – 2,25 ppm
$CH_2$: 2,9 – 4 ppm
arom.: 6,8 – 7,5 ppm

## Beispiel 7

200 g Propan-1,3-dimethylphosphinsäure werden auf 170° erhitzt und unter Rühren werden langsam die für die Umsetzung erforderliche Mengen Phosgen eingeleitet. Nach Beendigung der Reaktion wird im Wasserstrahlvakuum bei 140° C der im Reaktionsansatz befindliche Chlorwasserstoff entfernt. Der Rückstand wird destilliert. Man erhält 175 g Propan-1,3-dimethyl-phosphonsäureanhydrid der unten angegebenen Formel, Fp. 122 – 130° C, $Kp_{03}$: 163°. Das entspricht einer Ausbeute von 96% d. Th.

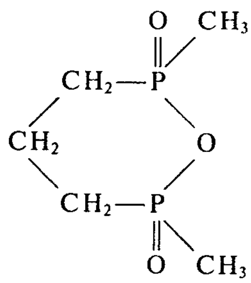

**Patentansprüche**

1. Bis-phosphinsäureanhydride der Formel I

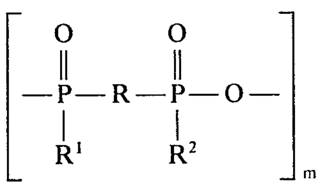 (I)

worin R ein gesättigter offenkettiger, verzweigter oder unverzweigter Alkylenrest mit 1 – 10 C-Atomen,

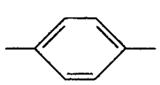 oder 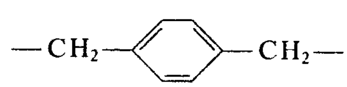

und $R^1$ und $R^2$ gleiche oder verschiedene Alkylgruppen mit 1–4 C-Atomen und m ganze Zahlen $\geq 1$ bedeuten.

2. Bis-phosphinsäureanhydride nach Anspruch 1, wobei R Alkylen mit 1 bis 6 C-Atomen und $R^1$ und $R^2$ Alkyl mit 1 bis 2 C-Atomen bedeuten und wobei $R^1$ und $R^2$ gleich sind.

3. Verfahren zur Herstellung der Bis-phosphinsäureanhydride nach Anspruch 1, dadurch gekennzeichnet, daß man Bis-phosphinsäurederivate der Formel

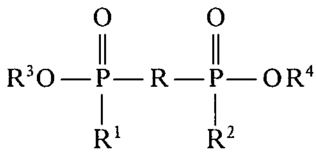

(II)

worin R, $R^1$ und $R^2$ die gleiche Bedeutung wie in Formel I haben, und $R^3$ und $R^4$, welche gleich oder verschieden sein können, H, ein einwertiges Kation, Ammonium, $C_1-C_5$-Alkyl oder $C_1-C_5$-Chloralkyl bedeuten, mit anorganischen Säurechloriden und/oder Phosgen und/oder Oxalylchlorid oder mit den entsprechenden Bromverbindungen im Molverhältnis von etwa 1 : 1 bei Temperaturen zwischen ca. Raumtemp. und 250° C, umsetzt.

4. Verfahren nach Anspruch 3, dadurch gekennzeichnet, daß man Bis-phosphonsäurederivate der Formel II mit Phosgen umsetzt.

5. Verfahren nach Anspruch 3, dadurch gekennzeichnet, daß man die Reaktion in einem inerten Lösungsmittel durchführt.

## Claims

1. Bisphosphinic acid anhydrides of the formula

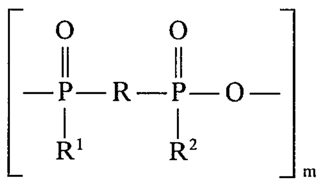

(I)

in which R is a saturated, open-chain, branched or unbranched alkylene radical having from 1 to 10, carbon atoms,

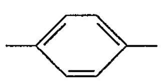

or

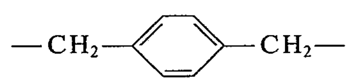

and $R^1$ and $R^2$ represent identical or different alkyl groups having from 1 to 4, carbon atoms and m is an integer of greater than or equal to 1.

2. Bisphosphinic acid anhydrides as claimed in claim 1, in which R is an alkylene radical having from 1 to 6 carbon atoms, and $R^1$ and $R^2$ are alkyl with 1 or 2 carbon atoms with the proviso that $R^1$ and $R^2$ are identical.

3. Process for the preparation of bisphosphinic acid anhydrides as claimed in claim 1 which comprises reacting bisphosphinic acid derivatives of the formula

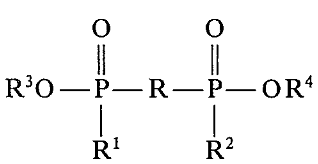

(II)

in which R, $R^1$ and $R^2$ are defined as in formula I, and $R^3$ and $R^4$, which may be the same or different, represent hydrogen, a monovalent cation, the ammonium group, $C_1-C_4$-alkyl or $C_1-C_4$-chloroalkyl with inorganic acid chlorides and/or with phosgene and/or with oxalyl chloride or with the corresponding bromine compounds in a molar ratio of about 1 : 1 at temperatur in the range of from about room temperature to 250° C.

4. Process as claimed in claim 3, which comprises reacting the bisphosphinic acid derivatives of the formula II with phosgene.

5. Process as claimed in claim 3, which comprises carrying out the reaction in an inert solvent.

**Revendications**

1. Anhydrides bis-phosphiniques répondant à la formule I

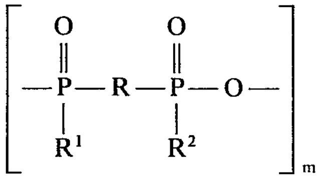

(I)

dans laquelle R représente un radical alkylène saturé à chaîne ouverte, ramifié ou non ramifié, contenant de 1 à 10 atomes de carbone, ou un radical:

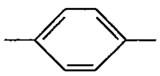

ou

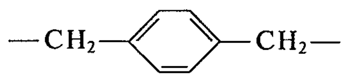

et $R^1$ et $R^2$ représentent chacun, indépendamment l'un de l'autre, un radical alkyle contenant de 1 à 4 atomes de carbone, et m désigne un nombre entier supérieur ou égal à 1.

2. Anhydrides bis-phosphiniques selon la revendication 1 dans lesquels R représente un radical alkylène contenant de 1 à 6 atomes de carbone et $R^1$ et $R^2$, qui sont identiques l'un à l'autre, représentent chacun un radical alkyle contenant 1 ou 2 atomes de carbone.

3. Procédé de préparation d'anhydrides bis-phosphiniques selon la revendication 1, procédé caractérisé en ce qu'on fait réagir des dérivés d'acides bis-phosphiniques répondant à la formule II

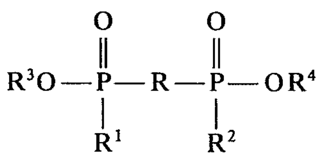

(II)

dans laquelle R, $R^1$ et $R^2$ ont les mêmes significations que dans la formule I et $R^3$ et $R^4$, qui peuvent être identiques ou différents, représentent chacun H, un cation monovalent, un ammonium, un radical alkyle en $C_1-C_5$ ou un radical chloralkyle en $C_1-C_5$, avec des chlorures d'acides minéraux et/ou le phosgène et/ou le chlorure d'oxalyle, ou avec les composés bromés correspondants, dans un rapport molaire d'environ 1 : 1, à des températures comprises entre environ la température ambiante et 250° C.

4. Procédé selon la revendication 3, caractérisé en ce qu'on fait réagir des dérivés d'acides bis-phosphiniques de formule II avec le phosgène.

5. Procédé selon la revendication 3, caractérisé en ce qu'on effectue la réaction dans un solvant inerte.